# FASCICULE DE BREVET EUROPEEN

(11) **EP 2 720 980 B1**
(45) Date de publication et mention de la délivrance du brevet: **29.09.2021**
(21) Numéro de dépôt: 12731334.4
(22) Date de dépôt: 13.06.2012
(51) Int. Cl.: C01G 25/02, B01J 37/03, B01J 37/06, B01J 37/34, B01J 23/10, B01J 23/34, B01D 53/94, C01G 25/00, B01J 35/10, B01J 37/00, B01J 35/02, B01J 23/83

(54) **COMPOSITION À BASE D'OXYDES DE CÉRIUM, DE ZIRCONIUM ET D'UNE AUTRE TERRE RARE À RÉDUCTIBILITÉ ÉLEVÉE, PROCÉDÉ DE PRÉPARATION ET UTILISATION DANS LE DOMAINE DE LA CATALYSE**
ZUSAMMENSETZUNG AUF BASIS VON OXIDEN VON CER, ZIRKONIUM UND ANDEREN SELTENERDMETALLEN MIT HOHER REDUZIERBARKEIT, VERFAHREN ZU IHRER HERSTELLUNG UND IHRE VERWENDUNG IN KATALYSEVORGÄNGEN
COMPOSITION BASED ON OXIDES OF CERIUM, OF ZIRCONIUM AND OF ANOTHER RARE EARTH METAL WITH HIGH REDUCIBILITY, PREPARATION PROCESS AND USE IN THE FIELD OF CATALYSIS

(30) Priorité: 17.06.2011 FR 1101867
(43) Date de publication de la demande: 23.04.2014
(73) Titulaire: RHODIA OPERATIONS, 93300 Aubervilliers (FR)
(72) Inventeur: IFRAH, Simon, 17220 La Jarrie (FR); ROHART, Emmanuel, 80000 AMIENS (FR); HERNANDEZ, Julien, 92160 Antony (FR); HORBEZ, Dominique, 95130 Franconville (FR); ITANI, Lama, 91600 Savigny-Sur-Orge (FR)
(74) Mandataire: Senninger, Thierry
(86) Numéro de dépôt international: PCT/EP2012/061179
(87) Numéro de publication internationale: WO 2012/171947

(56) Documents cités:
- EP-A1- 1 632 288
- EP-A2- 0 834 348
- WO-A2-2011/138255
- FR-A1- 2 859 470
- US-B1- 6 228 799
- None

## Description

La présente invention concerne une composition à base d'oxydes de cérium, de zirconium et d'au moins une terre rare autre que le cérium, à réductibilité élevée, son procédé de préparation et son utilisation dans le domaine de la catalyse.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). Les produits à base d'oxyde de cérium, d'oxyde de zirconium et d'un ou plusieurs oxydes d'autres terres rares apparaissent aujourd'hui comme des constituants particulièrement importants et intéressants rentrant dans la composition de ce type de catalyseurs. Pour être efficaces, ces constituants doivent présenter une surface spécifique importante même après avoir été soumis à des températures élevées, par exemple d'au moins 900°C.

Une autre qualité requise pour ces constituants de catalyseurs est la réductibilité. On entend par réductibilité, ici et pour le reste de la description, la capacité du catalyseur à se réduire en atmosphère réductrice et à se réoxyder en atmosphère oxydante. La réductibilité peut se mesurer notamment par la quantité d'oxygène mobile ou d'oxygène labile par unité de masse du matériau et pour une gamme de température donnée. Cette réductibilité et, par conséquent, l'efficacité du catalyseur, sont maximales à une température qui est actuellement assez élevée pour les catalyseurs à base des produits précités. Or, il existe un besoin en catalyseurs dont les performances soient suffisantes dans des gammes de température plus faibles.

Dans l'état actuel de la technique, par exemple représenté par les documents US6228799 B1, EP163288 A1 et FR2859470 A1, il apparaît que les deux caractéristiques mentionnées plus haut sont souvent difficiles à concilier, c'est à dire qu'une réductibilité élevée à plus basse température a pour contrepartie une surface spécifique plutôt faible.

L'objet de l'invention est de fournir une composition de ce type qui présente en combinaison une surface spécifique élevée et une bonne réductibilité à température plus basse.

Dans ce but, la composition de l'invention est à base d'oxydes de cérium, de zirconium et d'au moins une terre rare autre que le cérium avec une teneur en oxyde de cérium supérieure à 50% en masse et une teneur en oxyde de l'autre terre rare d'au plus 20 %, et elle est caractérisée en ce qu'elle présente après calcination à 1000°C, 4 heures une quantité d'oxygène mobile entre 200°C et 400°C d'au moins 0,8 ml O₂/g et une surface spécifique qui est d'au moins 25 m²/g, cette surface spécifique étant d'au moins 30 m²/g lorsque la teneur en oxyde de cérium est d'au plus 70 %.

D'autres caractéristiques, détails et avantages de l'invention apparaîtront encore plus complètement à la lecture de la description qui va suivre faite en référence aux dessins annexés et dans lesquels :
- la figure 1 est un schéma d'un réacteur utilisé pour la mise en œuvre du procédé de préparation de la composition de l'invention;
- la figure 2 représente les courbes obtenues par une mesure de réductibilité par réduction programmée en température d'une composition selon l'invention et d'un produit comparatif.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Pour la présente description on entend par terre rare les éléments du groupe constitué par l'yttrium et les éléments de la classification périodique de numéro atomique compris inclusivement entre 57 et 71.

En outre, les calcinations et notamment les calcinations à l'issue desquelles sont données les valeurs de surface sont des calcinations sous air à un palier de température sur la durée indiquée sauf indication contraire .

Les teneurs ou quantités sont données en masse d'oxyde par rapport à l'ensemble de la composition sauf indication contraire. L'oxyde de cérium est sous forme d'oxyde cérique, les oxydes des autres terres rares sous forme Ln₂O₃, Ln désignant la terre rare, à l'exception du praséodyme exprimé sous la forme Pr₆O₁₁.

On précise pour la suite de la description que, sauf indication contraire, dans les fourchettes de valeurs qui sont données, les valeurs aux bornes sont incluses.

La quantité d'oxygène mobile ou labile correspond à la moitié de la quantité en mole d'hydrogène consommée par réduction de l'oxygène de la composition pour former de l'eau et mesurée entre différentes bornes de température, entre 200°C et 450°C ou bien entre 200 et 400°C. Cette mesure est faite par réduction programmée en température sur un appareil AUTOCHEM II 2920 avec un réacteur en silice. On utilise l'hydrogène comme gaz réducteur à 10% en volume dans l'argon avec un débit de 30 mL/mn. Le protocole expérimental consiste à peser 200 mg de l'échantillon dans un récipient préalablement taré. L'échantillon est ensuite introduit dans une cellule en quartz contenant dans le fond de la laine de quartz. L'échantillon est enfin recouvert de laine de quartz, positionné dans le four de l'appareil de mesure et un thermocouple est placé au cœur de l'échantillon. On détecte un signal avec un détecteur de conductivité thermique. La consommation de l'hydrogène est calculée à partir de la surface manquante du signal d'hydrogène entre 200°C et 450°C ou encore entre 200°C et 400°C.

La température maximale de réductibilité (température à laquelle le captage de l'hydrogène est maximal et où, en d'autres termes, la réduction du cérium IV en cérium III est aussi maximale et qui correspond à une labilité maximale en O₂ de la composition) est mesurée en effectuant une réduction en température programmée, telle que décrite ci-dessus. Cette méthode permet de mesurer la consommation d'hydrogène d'une composition selon l'invention en fonction de la température et d'en déduire la température à laquelle le taux de réduction du cérium est maximum.

La mesure de réductibilité est faite par réduction programmée en température sur un échantillon qui a été préalablement calciné 4 heures à 1000°C sous air. La montée en température se fait de 50°C à 900°C à raison de 10°C/mn. Le captage de l'hydrogène est calculé à partir de la surface manquante du signal d'hydrogène de la ligne de base à la température ambiante à la ligne de base à 900°C.

La température maximale de réductibilité se traduit par un pic sur la courbe obtenue par la méthode de réduction en température programmée qui a été décrite. Il faut noter toutefois que dans certains cas une telle courbe peut comporter deux pics

Les compositions selon l'invention se caractérisent tout d'abord par la nature de leurs constituants.

Les compositions de l'invention sont du type oxydes mixtes, à base d'oxyde de cérium et qui comprennent en outre de l'oxyde de zirconium et un oxyde d'au moins une terre rare autre que le cérium. Pour la suite de la description on doit comprendre que, si par souci de simplification on ne mentionne qu'une terre rare, il est bien entendu que l'invention s'applique au cas où les compositions comprennent plusieurs terres rares, notamment deux.

La terre rare autre que le cérium peut être plus particulièrement choisie parmi l'yttrium, le lanthane, le néodyme, le praséodyme ou le gadolinium. On peut citer plus particulièrement les compositions à base d'oxydes de cérium, de zirconium, de praséodyme et de lanthane, celles à base d'oxydes de cérium, de zirconium, de praséodyme et d'yttrium, celles à base d'oxydes de cérium, de zirconium, de néodyme et de lanthane, celles à base d'oxydes de cérium, de zirconium, de lanthane et de gadolinium et celles à base d'oxydes de cérium, de zirconium, de lanthane et d'yttrium.

La teneur en oxyde de cérium est supérieure à 50%. Elle peut être comprise entre une valeur supérieure à 50% et 90%, notamment comprise entre 55% et 80% et encore plus particulièrement entre 60% et 80%.

La teneur en oxyde de l'autre terre rare, ou de l'ensemble des autres terres rares, est d'au plus 20% et plus particulièrement d'au plus 15%. Cette teneur peut être d'au moins 2%, de préférence d'au moins 5% et notamment d'au moins 10%. Elle peut être en particulier comprise entre 5% et 20%.

Les compositions de l'invention peuvent contenir en outre un ou plusieurs éléments additionnels qui peuvent être choisis dans le groupe comprenant le fer, le cobalt, le strontium, le cuivre et le manganèse. Ce ou ces éléments additionnels sont présents généralement sous forme d'oxyde. La quantité d'élément additionnel est généralement d'au plus 10%, elle peut être plus particulièrement comprise entre 2% et 8%.

L'invention concerne aussi les compositions constituées essentiellement d'oxydes de cérium, de zirconium et d'au moins une terre rare autre que le cérium et, éventuellement, d'un ou plusieurs éléments additionnels précités. On entend par là qu'elles peuvent comporter d'autres éléments sous forme de traces ou d'impuretés, comme l'hafnium notamment, mais qu'elles ne comportent pas d'autres éléments susceptibles notamment d'avoir une influence sur leur surface spécifique et/ou leurs propriétés de réductibilité.

Les compositions de l'invention ont pour caractéristique de présenter une quantité d'oxygène mobile importante dans une gamme de température relativement basse. Cette quantité exprimée en ml d'oxygène par gramme de composition est d'au moins 0,8 entre 200°C et 400°C. Cette quantité peut être notamment d'au moins 1 ml O₂/g, plus particulièrement d'au moins 1,2 ml O₂/g, encore plus particulièrement d'au moins 1,8 ml O₂/g. Des quantités jusqu'à environ au moins 2 ml O₂/g peuvent être atteintes.

Dans une gamme de température un peu plus large, c'est-à-dire entre 200°C et 450°C, les compositions de l'invention présentent une quantité d'oxygène mobile d'au moins 1 ml O₂/g, plus particulièrement d'au moins 2 ml O₂/g, encore plus particulièrement d'au moins 2,5 ml O₂/g. Des quantités jusqu'à environ au moins 3,5 ml O₂/g peuvent être atteintes.

Les compositions de l'invention ont pour autre caractéristique le fait de présenter après calcination à 1000°C pendant 4 heures une température maximale de réductibilité d'au plus 520°C, plus particulièrement d'au plus 510°C. Cette température maximale de réductibilité peut être comprise notamment entre 430°C et 520°C.

Les compositions de l'invention présentent aussi des caractéristiques particulières de surface spécifique. En effet, tout en présentant de bonnes propriétés de réductibilité à basse température, elles offrent en outre des surfaces spécifiques élevées même à hautes températures.

Ainsi, elles présentent après calcination à 1000°C, 4 heures une surface spécifique d'au moins 20 m²/g, plus particulièrement d'au moins 25 m²/g. Pour les compositions dont la teneur en oxyde de cérium est d'au plus 70% cette surface spécifique est d'au moins 30 m²/g, plus particulièrement d'au moins 35 m²/g. Dans ces mêmes conditions de calcination des surfaces spécifiques jusqu'à une valeur d'environ 45 m²/g peuvent être obtenues.

Par ailleurs, après calcination à 1100°C, 4 heures, ces compositions présentent une surface spécifique d'au moins 10 m²/g, plus particulièrement d'au moins 12 m²/g. Dans ces mêmes conditions de calcination des surfaces spécifiques jusqu'à une valeur d'environ 30 m²/g peuvent être obtenues.

Une autre caractéristique intéressante des compositions de l'invention est qu'elles peuvent se présenter sous forme de particules désagglomérables. Ainsi, par un simple traitement par ultrasons, ces particules peuvent présenter, après un tel traitement et quelle que soit la taille des particules au départ, un diamètre moyen (d₅₀) d'au plus 10 µm, plus particulièrement d'au plus 8 µm et encore plus particulièrement d'au plus 6 µm.

Les valeurs de granulométrie données ici et pour le reste de la description sont mesurées au moyen d'un granulométre laser de type Malvern Mastersizer 2000 (module HydroG) sur un échantillon de particules dispersées dans une solution à 1g/l d'hexaméthylphosphate (HMP) et soumis aux ultrasons (120 W) pendant 5 minutes.

Les compositions de l'invention se présentent généralement sous la forme d'une solution solide pure de l'oxyde de cérium, de l'oxyde de zirconium et de l'autre terre rare. On entend par là que le zirconium et l'autre terre rare sont présents totalement en solution solide dans l'oxyde de cérium. Les diagrammes en diffraction RX de ces compositions révèlent en particulier, au sein de ces dernières, l'existence d'une phase unique clairement identifiable et correspondant à celle d'un oxyde de cérium cristallisé dans le système cubique, traduisant ainsi l'incorporation du zirconium et de l'autre terre rare dans le réseau cristallin de l'oxyde de cérium, et donc l'obtention d'une solution solide vraie. Il est à noter que les compositions de l'invention peuvent présenter cette caractéristique de solution solide même après calcination à température élevée, par exemple au moins 1000°C, 4 heures et même encore après calcination à une température de 1100°C pendant 4 heures.

Le procédé de préparation des compositions de l'invention va maintenant être décrit. Ce procédé peut être mis en œuvre selon plusieurs variantes.

Selon une première variante le procédé est caractérisé en ce qu'il comprend les étapes suivantes :
- (a) on forme un mélange liquide comprenant des composés du cérium, du zirconium, de l'autre terre rare et, éventuellement, de l'élément additionnel;
- (b) on fait réagir en continu ledit mélange avec un composé basique
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un précipité à la sortie du réacteur;
- (c) on chauffe en milieu aqueux ledit précipité, le milieu étant maintenu à un pH d'au moins 5;
- (d) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

La première étape (a) du procédé consiste donc à préparer un mélange en milieu liquide des composés des éléments constitutifs de la composition, c'est à dire du cérium, du zirconium et de la terre rare supplémentaire. Dans le cas de la préparation de compositions comprenant un ou plusieurs éléments additionnels du type mentionné plus haut, le mélange de départ comprendra en outre un composé de cet ou ces éléments additionnels.

Le mélange se fait généralement dans un milieu liquide qui est l'eau de préférence.

Les composés sont de préférence des composés solubles. Ce peut être notamment des sels de zirconium, de cérium, de terre rare et éventuellement d'un élément additionnel.

Ces composés peuvent être choisis parmi les nitrates, les sulfates, les acétates, les chlorures, le nitrate céri-ammoniacal.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou le nitrate céri-ammoniacal par exemple, qui conviennent ici particulièrement bien. De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en œuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium sous forme III, il est préférable de faire intervenir dans le cours du procédé un agent oxydant, par exemple de l'eau oxygénée. Cet agent oxydant peut être utilisé en étant ajouté au milieu réactionnel lors de l'étape (a), lors de l'étape (b) ou encore au début de l'étape (c).

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique pour les faire réagir. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique peut être plus particulièrement utilisé sous forme d'une solution.

La réaction entre le mélange de départ et le composé basique se fait en continu dans un réacteur. Cette réaction se fait donc en introduisant en continu les réactifs et en soutirant en continu aussi le produit de la réaction.

Cette réaction peut se faire selon deux modes de réalisation en fonction du type de réacteur utilisé.

Selon un premier mode de réalisation, la réaction doit se faire dans des conditions telles que le temps de séjour du milieu réactionnel dans la zone de mélange du réacteur est d'au plus 100 millisecondes. On entend par « zone de mélange du réacteur » la partie du réacteur dans laquelle sont mis en présence le mélange de départ précité et le composé basique pour que la réaction ait lieu. Ce temps de séjour peut être plus particulièrement d'au plus 50 millisecondes, de préférence il peut être d'au plus 20 millisecondes. Ce temps de séjour peut être par exemple compris entre 10 et 20 millisecondes.

On réalise de préférence l'étape (b) en utilisant un excès stœchiométrique de composé basique pour s'assurer d'un rendement maximal de précipitation.

La réaction se fait de préférence sous forte agitation, par exemple dans des conditions telles que le milieu réactionnel est en régime turbulent.

La réaction se fait généralement à température ambiante.

On peut utiliser un réacteur de type mélangeur rapide.
Le mélangeur rapide peut être en particulier choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

De manière avantageuse, on utilise dans le procédé selon la présente invention un mélangeur à jets tangentiels, par exemple un mélangeur Hartridge-Roughton.

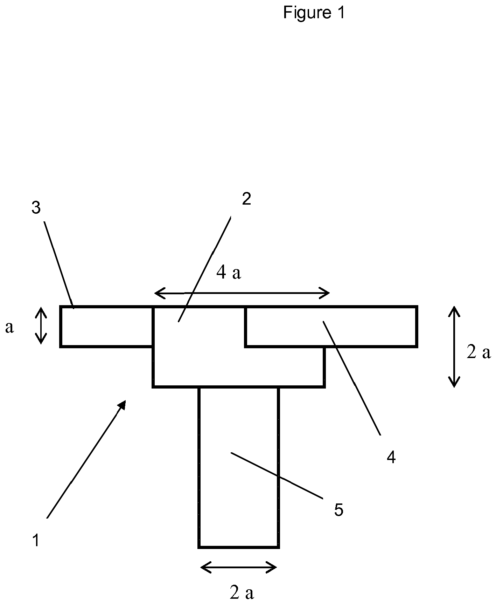

La figure 1 est un schéma qui représente un mélangeur de ce type. Ce mélangeur 1 comprend une chambre 2 ayant au moins deux admissions tangentielles 3 et 4 par lesquelles entrent séparément (mais en même temps) les réactifs, c'est-à-dire ici le mélange formé à l'étape (a) et le composé basique, ainsi qu'une sortie axiale 5 par laquelle sort le milieu réactionnel et ce, de préférence, vers un(e) réacteur (cuve) disposé(e) en série après ledit mélangeur. Les deux admissions tangentielles sont de préférence situées symétriquement et de manière opposée par rapport à l'axe central de la chambre 2.

La chambre 2 du mélangeur à jets tangentiels, Hartridge-Roughton utilisé présente généralement une section circulaire et est de préférence de forme cylindrique.

Chaque tube d'admission tangentielle peut présenter une hauteur interne (a) en section de 0,5 à 80 mm.

Cette hauteur interne (a) peut être comprise entre 0,5 et 10 mm, en particulier entre 1 et 9 mm, par exemple entre 2 et 7 mm. Cependant, notamment à l'échelle industrielle, elle est de préférence comprise entre 10 et 80 mm, en particulier entre 20 et 60 mm, par exemple entre 30 et 50 mm.

Le diamètre interne de la chambre 2 du mélangeur à jets tangentiels, Hartridge-Roughton employé peut être compris entre 3a et 6a, en particulier entre 3a et 5a, par exemple égal à 4a; le diamètre interne du tube de sortie axiale 5 peut être compris entre 1a et 3a, en particulier entre 1,5a et 2,5a, par exemple égal à 2a.

La hauteur de la chambre 2 du mélangeur peut être comprise entre 1a et 3a en particulier entre 1,5 et 2,5a, par exemple égal à 2a.

La réaction conduite à l'étape (b) du procédé conduit à la formation d'un précipité qui est évacué du réacteur et récupéré pour la mise en œuvre de l'étape (c).

Dans le cas du second mode de réalisation, l'étape (b) est mise en œuvre dans un réacteur de type centrifuge. Par réacteur de ce type on entend les réacteurs rotatifs utilisant la force centriguge.

On peut citer comme exemples de ce type de réacteurs, les mélangeurs ou réacteurs rotor-stators, les réacteurs à disque tournant (sliding surface reactor), dans lesquels les réactifs sont injectés sous cisaillement élevé dans un espace confiné entre le fond du réacteur et un disque tournant à vitesse élevée, ou encore les réacteurs dans lesquels la force centrifuge permet aux liquides de se mélanger intimement en films minces. Dans cette catégorie figurent le Spinning Disc Reactor (SDR) ou le Rotating Packed Bed reactor (RPB), décrit dans la demande de brevet US 2010/0028236 A1. Le réacteur décrit dans cette demande de brevet comporte une structure poreuse ou garnissage, en céramique, en mousse métallique ou en matière plastique, de forme cylindrique et qui tourne à vitesse élevée autour d'un axe longitudinal. Les réactifs sont injectés dans cette structure et se mélangent sous l'effet de fortes forces de cisaillement du fait des forces centrifuges pouvant atteindre plusieurs centaines de g créées par le mouvement de rotation de la structure. Le mélange des liquides dans des veines ou des films très fins permet d'atteindre ainsi des tailles nanométriques.

Le procédé selon la seconde variante de l'invention peut donc être mis en œuvre en introduisant dans la structure poreuse précitée le mélange formé à l'étape (a).

Les réactifs ainsi introduits peuvent être soumis à une accélération d'au moins 10 g, plus particulièrement d'au moins 100 g et qui peut être comprise par exemple entre 100 g et 300 g.

Compte tenu de leur conception, ces réacteurs peuvent être utilisés avec des temps de séjour du milieu réactionnel dans leur zone de mélange (au même sens que donné plus haut pour la première variante) plus élevés que pour la première variante de procédé, c'est-à-dire jusqu'à plusieurs secondes et en général d'au plus 10 s. De préférence, ce temps de séjour peut être d'au plus 1 s, plus particulièrement d'au plus 20 ms et encore plus particulièrement d'au plus 10 ms.

Comme pour le mode de réalisation précédent on réalise de préférence l'étape (b) en utilisant un excès stœchiométrique de composé basique et cette étape se fait généralement à température ambiante.

L'étape (c) est une étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 90°C et encore plus particulièrement d'au moins 100°C. Elle peut être comprise entre 100°C et 200°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 minute et 2 heures, ces valeurs étant données à titre tout à fait indicatif.

Le milieu soumis au chauffage présente un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante du procédé peut se faire selon deux variantes.

Selon une première variante, on ajoute au milieu réactionnel issu de l'étape précédente un additif qui est choisi parmi les tensioactifs anioniques, les tensioactifs non ioniques, les polyéthylène-glycols, les acides carboxyliques et leurs sels et les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés ou propoxylés, notamment ceux de la marque ALKAMULS®, les sarcosinates de formule R-C(O)N(CH₃)CH₂COO⁻, les bétaïnes de formule RR'NH-CH₃-COO⁻, R et R' étant des groupes alkyles ou alkylaryles, les esters phosphates, notamment ceux de la marque RHODAFAC®, les sulfates comme les sulfates d'alcool, les sulfates d'éther alcool et les éthoxylats d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les alcools gras éthoxylés ou propoxylés, par exemple ceux des marques RHODASURF® ou ANTAROX®, les alcanolamides, les oxydes d'amine, les alcanolamides éthoxylés, les amines éthoxylées ou propoxylées à longues chaînes, par exemple ceux de la marque RHODAMEEN®, les copolymères oxyde d'éthylène/oxide de propylène, les dérivés du sorbitan, l'éthylène glycol, le propylène glycol, le glycérol, les esters polyglyceryle et leurs dérivés éthoxylés, les alkylamines, les alkylimidazolines, les huiles éthoxylées et les alkylphénols éthoxylés ou propoxylés, notamment ceux de la marque IGEPAL®. On peut citer aussi en particulier les produits cités dans WO-98/45212 sous les marques IGEPAL®, DOWANOL®, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique, stéarique, hydroxystéarique, éthyl-2-hexanoïque et béhénique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

Une autre variante consiste à séparer d'abord le précipité issu de l'étape (c) puis à ajouter l'additif tensioactif à ce précipité.

La quantité de tensio-actif utilisée, exprimée en pourcentage en poids d'additif par rapport au poids de la composition calculé en oxyde, est généralement comprise entre 5% et 100% plus particulièrement entre 15% et 60%.

Après l'addition du tensio-actif, on maintient le mélange obtenu de préférence sous agitation pendant une durée qui peut être d'environ une heure. On sépare ensuite éventuellement le précipité du milieu liquide par tout moyen connu.

Le précipité séparé peut éventuellement être lavé, notamment par de l'eau ammoniaquée.

Dans une dernière étape (e) du procédé selon l'invention, le précipité récupéré, éventuellement séché, est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en œuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300 et 900°C sur une durée qui peut être par exemple comprise entre 1 heure et 10 heures.

D'autres variantes du procédé de préparation de l'invention vont être décrites ci-dessous. Ces variantes diffèrent de la première variante décrite précédemment par le fait que le composé de la terre rare autre que le cérium et de l'élément additionnel sont introduits au cours du procédé d'une manière différente par rapport à ce qui a été décrit pour la première variante.

Selon une seconde variante le procédé de l'invention comprend les étapes suivantes :
- (a1) on forme un premier mélange liquide comprenant des composés du cérium et du zirconium et un second mélange liquide comprenant des composés de l'autre terre rare et, éventuellement, de l'élément additionnel;
- (b1) on fait réagir en continu le premier mélange avec un composé basique
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un premier précipité à la sortie du réacteur;
- (b'1) on met en contact ce premier précipité avec le second mélange liquide précité ce par quoi on obtient un second précipité;
- (c1) on chauffe en milieu aqueux le second précipité, le milieu étant maintenu à un pH d'au moins 5;
- (d1) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e1) on calcine le solide issu de l'étape précédente.

La mise en contact de l'étape (b'1) peut se faire en mélangeant avec le second mélange, sous agitation et dans un deuxième réacteur le premier précipité en suspension tel qu'issu du réacteur dans lequel a eu lieu la réaction.

Selon une troisième variante, le procédé de l'invention comprend les étapes suivantes :
- (a2) on forme un premier mélange liquide comprenant des composés du cériumet du zirconium et un second mélange liquide comprenant des composés de l'autre terre rare et, éventuellement, de l'élément additionnel;
- (b2) on fait réagir en continu le premier mélange avec un composé basique
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un premier précipité à la sortie du réacteur;
- (b'2) on fait réagir le second mélange liquide précité avec un composé basique ce par quoi on obtient un second précipité;
- (b"2) on mélange les premier et second précipités;
- (c2) on chauffe en milieu aqueux le mélange de précipités obtenu à l'issue de l'étape précédente, le milieu étant maintenu à un pH d'au moins 5;
- (d2) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e2) on calcine le solide issu de l'étape précédente.

Selon une quatrième variante, le procédé de l'invention comprend les étapes suivantes :
- (a3) on forme un premier mélange liquide comprenant des composés du cérium et du zirconium et un second mélange liquide comprenant des composés de l'autre terre rare et, éventuellement, de l'élément additionnel;
- (b3) on fait réagir en continu le premier mélange avec un composé basique
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un précipité à la sortie du réacteur;
- (c3) on chauffe en milieu aqueux ledit précipité, le milieu étant maintenu à un pH d'au moins 5;
- (d3) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d'3) on met en contact le précipité issu de l'étape précédente avec le second mélange précité;
- (e3) on calcine le solide issu de l'étape précédente.

Selon une cinquième variante, le procédé de l'invention comprend les étapes suivantes :
- (a4) on forme un premier mélange liquide comprenant des composés du cérium et du zirconium et un second mélange liquide comprenant des composés de l'autre terre rare et, éventuellement, de l'élément additionnel;
- (b4) on fait réagir en continu le premier mélange avec un composé basique,
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un premier précipité à la sortie du réacteur;
- (c4) on chauffe en milieu aqueux le précipité obtenu à l'issue de l'étape précédente, le milieu étant maintenu à un pH d'au moins 5;
- (d4) on ajoute au produit solide ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d'4) on fait réagir le second mélange liquide précité avec un composé basique ce par quoi on obtient un second précipité;
- (d"4) on mélange ce second précipité avec le solide ou le milieu obtenu à l'issue de l'étape (d4);
- (e4) on calcine le mélange ainsi obtenu.

Selon une sixième variante, le procédé de l'invention comprend les étapes suivantes :
- (a5) on forme un premier mélange liquide comprenant des composés du cérium et du zirconium;
- (b5) on fait réagir en continu ledit mélange avec un composé basique
   - soit dans un réacteur dans lequel le temps de séjour du milieu réactionnel dans la zone de mélange du réacteur est d'au plus 100 millisecondes,
   - soit dans un réacteur centrifuge dans lequel le temps de séjour du milieu réactionnel dans la zone de mélange du réacteur est d'au plus 10 secondes,
   ce par quoi on obtient un précipité à la sortie du réacteur;
- (c5) on chauffe en milieu aqueux ledit précipité, le milieu étant maintenu à un pH d'au moins 5;
- (d5) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e5) on calcine le solide issu de l'étape précédente.
- (f5) on forme un second mélange liquide comprenant des composés de l'autre terre rare et, éventuellement, de l'élément additionnel;
- (g5) on imprègne le solide calciné issu de l'étape (e5) par le second mélange;
- (h5) on calcine le solide issu de l'étape précédente.

On peut noter que pour les troisième et cinquième variantes les étapes (b'2) et (d'4) de réaction avec le composé basique peuvent être réalisées en continu, dans les mêmes types de réacteur et dans les mêmes conditions que ceux qui ont été décrits pour la première variante et l'étape (b) de celle-ci.

Comme on l'a mentionné plus haut, les différences essentielles entre les différentes variantes décrites plus haut résident dans le mode d'introduction des composés de la terre rare autre que le cérium et de l'élément additionnel. C'est pourquoi tout ce qui a été décrit pour la première variante s'applique à l'identique pour les caractéristiques communes à cette première variante et aux autres. Ainsi, ce qui a été décrit au sujet de l'étape (a) notamment sur la nature des mélanges des composés du cérium, du zirconium, de l'autre terre rare et de l'élément additionnel et sur la préparation de ces mélanges s'applique de même pour les autres variantes, notamment pour les étapes (a1), (a2), (a3), (a4), (a5) et (f5).

Il en est de même pour l'étape (b) et les étapes (b1), (b2), (b3), (b4), (b5), (b'2) et (d'4).

La description de l'étape (c) s'applique aux étapes analogues (c1), (c2), (c3), (c4) et (c5) et celle de l'étape (d) s'applique aussi aux étapes (d1), (d2), (d3), (d4) et (d5).

Les conditions de calcination données pour l'étape (e) sont aussi identiques pour les étapes de calcination (e1), (e2), (e3), (e4), (e5) et (h5).

Selon une autre variante du procédé de l'invention, les éléments additionnels fer, cobalt, strontium, cuivre et manganèse peuvent ne pas être ajoutés lors de la préparation de la composition telle qu'elle a été décrite plus haut mais ils peuvent être apportés en utilisant la méthode d'imprégnation. Dans ce cas la composition issue de la calcination et à base d'oxydes de cérium, de zirconium et d'au moins une terre rare autre que le cérium est imprégnée par une solution d'un sel d'élément additionnel puis soumise à une autre calcination dans les mêmes conditions que celles données plus haut.

Le produit issu de la calcination se présente sous la forme d'une poudre et, si nécessaire, il peut être désaggloméré ou broyé en fonction de la taille souhaitée pour les particules constituant cette poudre.

Les compositions de l'invention peuvent aussi éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des matériaux inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique par exemple FerCralloy, ou en céramique, par exemple en cordiérite, en carbure de silicium, en titanate d'alumine ou en mullite. Le revêtement peut comporter lui aussi un matériau inerte thermiquement du type de ceux mentionnés plus haut. Ce revêtement est obtenu par mélange de la composition avec ce matériau de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, l'oxydation de gaz issus de sources stationnaires ainsi que le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre.

Les systèmes catalytiques et les compositions de l'invention peuvent être utilisés comme pièges à NOx ou encore dans un procédé SCR, c'est-à-dire un procédé de réduction des NOx dans lequel cette réduction est effectuée par de l'ammoniac ou un précurseur de l'ammoniac comme l'urée.

Dans le cas de ces utilisations en catalyse, les compositions de l'invention sont employées généralement en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

### EXEMPLE 1

Cet exemple concerne une composition à 64% de cérium, 26% de zirconium, 5% de lanthane et 5% de néodyme, ces proportions étant exprimées en pourcentages massiques des oxydes ZrO₂, CeO2, La₂O₃ et Nd₂O₃.

Dans un bécher agité, on introduit la quantité nécessaire de nitrate de zirconium, de nitrate de cérium, de nitrate de lanthane et de nitrate de néodyme. On complète ensuite avec de l'eau distillée de façon à obtenir 1 litre d'une solution de nitrates à 120 g/l (exprimé ici et pour l'ensemble des exemples en équivalent d'oxyde).

Dans un autre bécher agité, on introduit une solution d'ammoniaque (10 mol/l) et on complète ensuite avec de l'eau distillée de façon à obtenir un volume total de 1 litre et un excès stœchiométrique en ammoniaque de 20% par rapport aux cations à précipiter.

On maintient sous agitation constante les deux solutions préparées précédemment et on les introduit en continu dans un mélangeur rapide Hartridge-Roughton du type de celui de la figure 1 et de hauteur d'entrée (a) de 2 mm.

Le pH en sortie du mélangeur est de 9,2. Le débit de chacun des réactifs est de 30 l/h et le temps de séjour de 12 ms.

La suspension de précipité ainsi obtenue est placée dans un autoclave en acier inoxydable équipé d'un mobile d'agitation. La température du milieu est portée à 100°C pendant 30 minutes sous agitation.

On ajoute à la suspension ainsi obtenue 33 grammes d'acide laurique. La suspension est maintenue sous agitation pendant 1 heure.

La suspension est alors filtrée sur Büchner et le précipité filtré est ensuite lavé à l'eau ammoniaquée.

Le produit obtenu est ensuite porté à 700°C pendant 4 heures en palier puis désaggloméré dans un mortier.

### EXEMPLE 2 COMPARATIF

Cet exemple concerne la même composition que celle de l'exemple 1.

On part des mêmes réactifs et on prépare 1 litre d'une solution de nitrates de zirconium, de cérium, de lanthane et de néodyme.

Dans un réacteur agité, on introduit une solution d'ammoniaque (10 mol/l) et on complète ensuite avec de l'eau distillée de façon à obtenir un volume total de 1 litre et un excès stœchiométrique en ammoniaque de 20% par rapport aux nitrates à précipiter.

La solution de nitrates est introduite dans le réacteur sous agitation constante en 1 heure. On procède ensuite après la précipitation de la même manière que dans l'exemple 1.

### EXEMPLE 3

Cet exemple concerne une composition à 60% de cérium, 30% de zirconium, 3% de lanthane et 7% de praséodyme, ces proportions étant exprimées en pourcentages massiques des oxydes ZrO₂, CeO₂, La₂O₃ et Pr₆O₁₁.

Dans un bécher agité, on introduit la quantité nécessaire de nitrate de zirconium, de nitrate de cérium, de nitrate de lanthane et de nitrate de praséodyme. On complète ensuite avec de l'eau distillée de façon à obtenir 1 litre d'une solution de nitrates à 120 g/l.

Dans un autre bécher agité, on introduit une solution d'ammoniaque (10 mol/l) et on complète ensuite avec de l'eau distillée de façon à obtenir un volume total de 1 litre et un excès stœchiométrique en ammoniaque de 20% par rapport aux cations à précipiter.

On maintient sous agitation constante les deux solutions préparées précédemment et on les introduit en continu dans le même mélangeur rapide que celui de l'exemple 1.

Le pH en sortie du mélangeur est de 9,1. Le débit de chacun des réactifs est de 30 l/h et le temps de séjour de 12 ms.

On procède ensuite comme dans l'exemple 1.

### EXEMPLE 4 COMPARATIF

Cet exemple concerne la même composition que celle de l'exemple 3.

On part des mêmes réactifs et on prépare 1 litre d'une solution de nitrates de zirconium, de cérium, de lanthane et de praséodyme.

Dans un réacteur agité, on introduit une solution d'ammoniaque (10 mol/l) et on complète ensuite avec de l'eau distillée de façon à obtenir un volume total de 1 litre et un excès stœchiométrique en ammoniaque de 20% par rapport aux nitrates à précipiter.

La solution de nitrates est introduite dans le réacteur sous agitation constante en 1 heure. On procède ensuite après la précipitation de la même manière que dans l'exemple 3.

### EXEMPLE 5

Cet exemple concerne une composition à 80% de cérium, 10% de zirconium, 3% de lanthane et 7% de praséodyme, ces proportions étant exprimées en pourcentages massiques des oxydes ZrO₂, CeO₂, La₂O₃ et Pr₆O₁₁.

Dans un bécher agité, on introduit la quantité nécessaire de nitrate de zirconium, de nitrate de cérium, de nitrate de lanthane et de nitrate de praséodyme. On complète ensuite avec de l'eau distillée de façon à obtenir 1 litre d'une solution de nitrates à 120 g/l.

Dans un autre bécher agité, on introduit une solution d'ammoniaque (10 mol/l) et on complète ensuite avec de l'eau distillée de façon à obtenir un volume total de 1 litre et un excès stœchiométrique en ammoniaque de 40% par rapport aux cations à précipiter.

On maintient sous agitation constante les deux solutions préparées précédemment et on les introduit en continu dans le même mélangeur rapide que celui de l'exemple 1.

Le pH en sortie du mélangeur est de 9,2. Le débit de chacun des réactifs est de 30 l/h et le temps de séjour de 12 ms.

On procède ensuite comme dans l'exemple 1.

### EXEMPLE 6 COMPARATIF

Cet exemple concerne la même composition que celle de l'exemple 5.

On part des mêmes réactifs et on prépare 1 litre d'une solution de nitrates de zirconium, de cérium, de lanthane et praséodyme.

Dans un réacteur agité, on introduit une solution d'ammoniaque (10 mol/l) et on complète ensuite avec de l'eau distillée de façon à obtenir un volume total de 1 litre et un excès stœchiométrique en ammoniaque de 40% par rapport aux nitrates à précipiter.

La solution de nitrates est introduite dans le réacteur sous agitation constante en 1 heure.

On procède ensuite après la précipitation de la même manière que dans l'exemple 4.

### EXEMPLE 7

Cet exemple concerne une composition à 64% de cérium, 26% de zirconium, 5% de lanthane et 5% de néodyme, ces proportions étant exprimées en pourcentages massiques des oxydes ZrO₂, CeO₂, La₂O₃ et Nd₂O₃. Le procédé de préparation utilisé correspond à la deuxième variante décrite plus haut.

Dans un bécher agité, on introduit la quantité nécessaire de nitrate de zirconium et de nitrate de cérium. On complète ensuite avec de l'eau distillée de façon à obtenir 1 litre d'une solution de nitrates à 162 g/l (solution A).

Dans un deuxième bécher agité, on introduit la quantité nécessaire de nitrate de lanthane et de nitrate de néodyme. On complète ensuite avec de l'eau distillée de façon à obtenir 1 litre d'une solution de nitrates à 18 g/l (solution B).

Dans un troisième bécher agité, on introduit une solution d'ammoniaque (10 mol/l) et on complète ensuite avec de l'eau distillée de façon à obtenir un volume total de 1 litre et un excès stœchiométrique en ammoniaque de 40% par rapport aux cations cerium, zirconium, lanthane et néodyme (solution C).

On maintient sous agitation constante les solutions A et C préparées précédemment et on les introduit en continu dans le même mélangeur rapide que celui de l'exemple 1.

Le pH en sortie du mélangeur est de 9,2. Le débit de chacun des réactifs est de 30 l/h et le temps de séjour de 12 ms.

La suspension de précipité ainsi obtenue est placée dans un réacteur équipé d'un mobile d'agitation. La solution B est ensuite introduite dans ce réacteur à l'aide d'une pompe perilstatique. Après introduction de la solution B, la suspension de précipité ainsi obtenue est laissée sous agitation pendant 30 minutes.

La suspension de précipité obtenue à l'étape précédente est ensuite transférée dans un autoclave en acier inoxydable équipé d'un mobile d'agitation. La température du milieu est portée à 100°C pendant 30 minutes sous agitation.

On ajoute à la suspension ainsi obtenue 33 grammes d'acide laurique. La suspension est maintenue sous agitation pendant 1 heure.

La suspension est alors filtrée sur Büchner et le précipité filtré est ensuite lavé à l'eau ammoniaquée.

Le produit obtenu est ensuite porté à 700°C pendant 4 heures en palier puis désaggloméré dans un mortier.

### EXEMPLE 8

Cet exemple concerne une composition à 64% de cérium, 26% de zirconium, 5% de lanthane et 5% de néodyme, ces proportions étant exprimées en pourcentages massiques des oxydes ZrO₂, CeO₂, La₂O₃ et Nd₂O₃. Le procédé de préparation utilisé correspond à la sixième variante décrite plus haut.

Dans un bécher agité, on introduit la quantité nécessaire de nitrate de zirconium et de nitrate de cérium. On complète ensuite avec de l'eau distillée de façon à obtenir 1 litre d'une solution de nitrates à 120 g/l (solution A).

Dans un deuxième bécher agité, on introduit une solution d'ammoniaque (10 mol/l) et on complète ensuite avec de l'eau distillée de façon à obtenir un volume total de 1 litre et un excès stœchiométrique en ammoniaque de 40% par rapport aux cations cerium et zirconium (solution B).

On maintient sous agitation constante les solutions A et B préparées précédemment et on les introduit en continu dans le même mélangeur rapide que celui de l'exemple 1.

Le pH en sortie du mélangeur est de 9,2. Le débit de chacun des réactifs est de 30 l/h et le temps de séjour de 12 ms.

La suspension de précipité ainsi obtenue est placée dans un autoclave en acier inoxydable équipé d'un mobile d'agitation. La température du milieu est portée à 100°C pendant 30 minutes sous agitation.

On ajoute à la suspension ainsi obtenue 33 grammes d'acide laurique. La suspension est maintenue sous agitation pendant 1 heure.

La suspension est alors filtrée sur Büchner et le précipité filtré est ensuite lavé à l'eau ammoniaquée.

Le produit obtenu est ensuite porté à 700°C pendant 4 heures en palier puis désaggloméré dans un mortier.

Dans un troisième bécher agité, on introduit la quantité nécessaire de nitrate de lanthane et de nitrate de néodyme (mélange C). On imprègne ensuite le précipité sec et calciné obtenu à l'étape précédente à l'aide dudit mélange C.

Le produit obtenu est ensuite porté à 700°C pendant 4 heures en palier puis désaggloméré dans un mortier.

On donne dans les tableaux 1 et 2 ci-dessous, les caractéristiques des produits obtenus dans les exemples.

**Tableau 1**

| Exemple | Surface spécifique SBET (m²/g) après calcination 4h à | | |
|---|---|---|---|
| | 900 °C | 1000 °C | 1100 °C |
| 1 | 67 | 42 | 28 |
| 2 comparatif | 67 | 38 | 23 |
| 3 | 58 | 35 | 18 |
| 4 comparatif | 48 | 38 | 18 |
| 5 | 47 | 28 | 15 |
| 6 comparatif | 39 | 29 | 18 |
| 7 | 65 | 40 | 25 |
| 8 | 60 | 38 | 23 |

**Tableau 2**

| Exemple | Température maximale de réductibilité (°C) | Quantité d'O₂ labile entre 200 et 400 °C (mL/g) | Quantité d'O₂ labile entre 200 et 450 °C (mL/g) |
|---|---|---|---|
| | 1 000 °C⁽²⁾ | 1000 °C⁽²⁾ | 1 000 °C⁽²⁾ |
| 1 | 485 | 1,3 | 2,5 |
| 2 comparatif | 558 | 0,4 | 1 |
| 3 | 502 | 1,4 | 2,8 |
| 4 comparatif | 570 | 0,3 | 0,8 |
| 5 | 370-500⁽³⁾ | 1,2 | 2,9 |
| 6 comparatif | 420-570⁽³⁾ | 0,5 | 0,9 |
| 7 | 490 | 1,2 | 2,2 |
| 8 | 487 | 1,1 | 2,1 |

| | | | |
|---|---|---|---|
| (2) Cette température est celle à laquelle a été préalablement soumise, pendant 4h, la composition avant la mesure de réductibilité. (3) Les courbes obtenues par la réduction en température programmée comportent deux pics, ces deux pics étant tous les deux situés à une température inférieure à 520°C pour la composition de l'invention. | | | |

Il est à noter que les produits des exemples 1 à 8 se présentent sous la forme d'une solution solide après calcination 4 heures à 1000°C et 4 heures à 1100 °C.

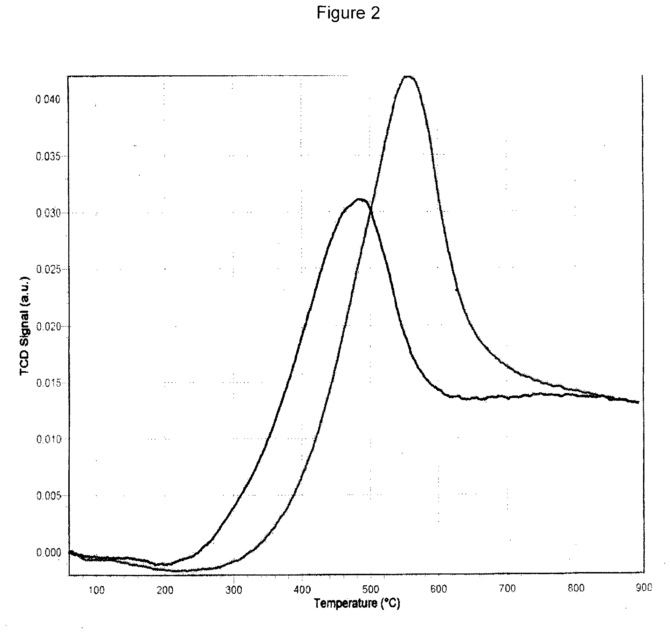

La figure 2 donne les courbes obtenues en mettant en œuvre la mesure de réductibilité décrite plus haut. La température figure en abscisse et la valeur du signal mesuré est donnée en ordonnée. La température maximale de réductibilité est celle qui correspond à la hauteur maximale du pic de la courbe. La figure donne les courbes obtenues pour les compositions des exemples 1 (courbe avec le pic le plus à gauche de la figure) et 2 comparatif (courbe avec le pic le plus à droite).

On donne dans le tableau 3 ci-dessous, les caractéristiques de granulométrie des produits des exemples.

Les mesures de granulométrie sont faites dans les conditions suivantes.

Appareil : granulomètre à diffraction de la lumière Malvern Mastersizer 2000 (module HydroG) (granulométrie par diffraction laser).

Modèle Optique Fraunhofer (Différence de diffusion des intensités polarisées)
Echantillon : une masse de 0,5 g de produit est mis en suspension dans une cuve à ultra-sons et dans un volume de 80 ml d'une solution à 1g/l d'hexaméthylphosphate (HMP).

On désagglomère la suspension en faisant fonctionner la cuve pendant 5 mn à 120 Watts.

Mesures : deux mesures sont réalisées à partir de la suspension sans et avec traitement par ultra-son.

Pour ces mesures on prélève un échantillon de suspension de la cuve à ultra-sons et on l'introduit dans le granulomètre en le maintenant sous agitation magnétique.

**Tableau 3**

| Exemple | D₅₀ (µm) | |
|---|---|---|
| | Produit initial | Produit après traitement |
| 5 | 38,1 | 3,2 |
| 6 comparatif | 41,6 | 23,8 |

Le produit initial est le produit tel qu'obtenu à la fin du procédé décrit dans les exemples c'est-à-dire désaggloméré dans un mortier après la calcination à 700°C.

Le produit après traitement est le produit issu du traitement par ultrasons du produit initial.

Le produit de l'exemple comparatif est beaucoup moins désagglomérable que celui de l'exemple 1 selon l'invention.

## Revendications

1. Composition à base d'oxydes de cérium, de zirconium et d'au moins une terre rare autre que le cérium, ayant une teneur en oxyde de cérium supérieure à 50% en masse et une teneur en oxyde de l'autre terre rare d'au plus 20%, **caractérisée en ce qu'**elle présente après calcination à 1000°C, 4 heures, une quantité d'oxygène mobile entre 200°C et 400°C d'au moins 0,8 ml O₂/g et une surface spécifique qui est d'au moins 25 m²/g, cette surface spécifique étant d'au moins 30 m²/g lorsque la teneur en oxyde de cérium est d'au plus 70%.

2. Composition selon la revendication 1 qui est choisie parmi l'une des compositions suivantes
- composition à base d'oxydes de cérium, de zirconium, de praséodyme et de lanthane ;
- composition à base d'oxydes de cérium, de zirconium, de praséodyme et d'yttrium ;
- composition à base d'oxydes de cérium, de zirconium, de néodyme et de lanthane ;
- composition à base d'oxydes de cérium, de zirconium, de lanthane et de gadolinium ;
- composition à base d'oxydes de cérium, de zirconium, de lanthane et d'yttrium.

3. Composition selon la revendication 1 ou la revendication 2, **caractérisée en ce qu'**elle présente une quantité d'oxygène mobile entre 200°C et 400°C d'au moins 1 ml O₂/g, plus particulièrement d'au moins 1,2 ml O₂/g, encore plus particulièrement d'au moins 1,8 ml O₂/g.

4. Composition selon la revendication 1 à 3, **caractérisée en ce qu'**elle présente une quantité d'oxygène mobile entre 200°C et 450°C d'au moins 1 ml O₂/g, plus particulièrement d'au moins 2 ml O₂/g, encore plus particulièrement d'au moins 2,5 ml O₂/g.

5. Composition selon l'une des revendications précédentes, **caractérisée en ce qu'**elle présente une teneur en oxyde de cérium comprise entre une valeur supérieure à 50% et 90%, plus particulièrement entre 55% et 80%.

6. Composition selon la revendication 1 à 5, **caractérisée en ce qu'**elle présente une teneur en oxyde de l'autre terre rare comprise entre 5% et 20%.

7. Composition selon la revendication 1 ou l'une des revendications 2 à 6, **caractérisée en ce que** la terre rare est choisie dans le groupe comprenant l'yttrium, le lanthane, le praséodyme, le gadolinium et le néodyme.

8. Composition selon l'une des revendications précédentes **caractérisée en ce qu'**elle comprend en outre un ou plusieurs éléments additionnels choisis dans le groupe comprenant le fer, le cobalt, le strontium, le cuivre et le manganèse.

9. Composition selon l'une des revendications précédentes, **caractérisée en ce qu'**elle présente une température maximale de réductibilité d'au plus 520°C après calcination à 1000°C pendant 4 heures.

10. Composition selon l'une des revendications précédentes, **caractérisée en ce qu'**elle est désagglomérable par un traitement par ultra-sons et **en ce qu'**elle se présente après ce traitement sous forme de particules dont le diamètre moyen (dso) est d'au plus 10 µm.

11. Procédé de préparation d'une composition selon l'une des revendications précédentes, **caractérisé en ce qu'**il comprend les étapes suivantes :
- (a) on forme un mélange liquide comprenant des composés du cérium, du zirconium, de l'autre terre rare et, éventuellement, de l'élément additionnel;
- (b) on fait réagir en continu ledit mélange avec un composé basique
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un précipité à la sortie du réacteur;
- (c) on chauffe en milieu aqueux ledit précipité, le milieu étant maintenu à un pH d'au moins 5;
- (d) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le solide issu de l'étape précédente.

12. Procédé de préparation d'une composition selon l'une des revendications 1 à 10, **caractérisé en ce qu'**il comprend les étapes suivantes :
- (a1) on forme un premier mélange liquide comprenant des composés du cérium et du zirconium et un second mélange liquide comprenant des composés de l'autre terre rare et, éventuellement, de l'élément additionnel;
- (b1) on fait réagir en continu le premier mélange avec un composé basique
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un premier précipité à la sortie du réacteur;
- (b'1) on met en contact ce premier précipité avec le second mélange liquide précité ce par quoi on obtient un second précipité;
- (c1) on chauffe en milieu aqueux le second précipité, le milieu étant maintenu à un pH d'au moins 5;
- (d1) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e1) on calcine le solide issu de l'étape précédente.

13. Procédé de préparation d'une composition selon l'une des revendications 1 à 10, **caractérisé en ce qu'**il comprend les étapes suivantes :
- (a2) on forme un premier mélange liquide comprenant des composés du cériumet du zirconium et un second mélange liquide comprenant des composés de l'autre terre rare et, éventuellement, de l'élément additionnel;
- (b2) on fait réagir en continu le premier mélange avec un composé basique
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un premier précipité à la sortie du réacteur;
- (b'2) on fait réagir le second mélange liquide précité avec un composé basique ce par quoi on obtient un second précipité;
- (b"2) on mélange les premier et second précipités;
- (c2) on chauffe en milieu aqueux le mélange de précipités obtenu à l'issue de l'étape précédente, le milieu étant maintenu à un pH d'au moins 5;
- (d2) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e2) on calcine le solide issu de l'étape précédente.

14. Procédé de préparation d'une composition selon l'une des revendications 1 à 10, **caractérisé en ce qu'**il comprend les étapes suivantes :
- (a3) on forme un premier mélange liquide comprenant des composés du cérium et du zirconium et un second mélange liquide comprenant des composés de l'autre terre rare et, éventuellement, de l'élément additionnel;
- (b3) on fait réagir en continu le premier mélange avec un composé basique
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un précipité à la sortie du réacteur;
- (c3) on chauffe en milieu aqueux ledit précipité, le milieu étant maintenu à un pH d'au moins 5;
- (d3) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d'3) on met en contact le précipité issu de l'étape précédente avec le second mélange précité;
- (e3) on calcine le solide issu de l'étape précédente.

15. Procédé de préparation d'une composition selon l'une des revendications 1 à 10, **caractérisé en ce qu'**il comprend les étapes suivantes :
- (a4) on forme un premier mélange liquide comprenant des composés du cérium et du zirconium et un second mélange liquide comprenant des composés de l'autre terre rare et, éventuellement, de l'élément additionnel;
- (b4) on fait réagir en continu le premier mélange avec un composé basique,
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un premier précipité à la sortie du réacteur;
- (c4) on chauffe en milieu aqueux le précipité obtenu à l'issue de l'étape précédente, le milieu étant maintenu à un pH d'au moins 5;
- (d4) on ajoute au produit solide ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d'4) on fait réagir le second mélange liquide précité avec un composé basique ce par quoi on obtient un second précipité;
- (d"4) on mélange ce second précipité avec le solide ou le milieu obtenu à l'issue de l'étape (d4);
- (e4) on calcine le mélange ainsi obtenu.

16. Procédé de préparation d'une composition selon l'une des revendications 1 à 10, **caractérisé en ce qu'**il comprend les étapes suivantes :
- (a5) on forme un premier mélange liquide comprenant des composés du cérium et du zirconium;
- (b5) on fait réagir en continu ledit mélange avec un composé basique
- soit dans un réacteur dans lequel le temps de séjour du milieu réactionnel dans la zone de mélange du réacteur est d'au plus 100 millisecondes,
- soit dans un réacteur centrifuge dans lequel le temps de séjour du milieu réactionnel dans la zone de mélange du réacteur est d'au plus 10 secondes,
ce par quoi on obtient un précipité à la sortie du réacteur;
- (c5) on chauffe en milieu aqueux ledit précipité, le milieu étant maintenu à un pH d'au moins 5;
- (d5) on ajoute au précipité ou au milieu réactionnel issu de l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e5) on calcine le solide issu de l'étape précédente.
- (f5) on forme un second mélange liquide comprenant des composés de l'autre terre rare et, éventuellement, de l'élément additionnel;
- (g5) on imprègne le solide calciné issu de l'étape (e5) par le second mélange;
- (h5) on calcine le solide issu de l'étape précédente.

17. Procédé selon l'une des revendications 11 à 16, **caractérisé en ce qu'**on utilise comme composés du cérium, du zirconium, de l'autre terre rare et, éventuellement, de l'élément additionnel des composés choisis parmi les nitrates, les sulfates, les acétates, les chlorures, le nitrate céri-ammoniacal.

18. Procédé selon l'une des revendications 11 à 17, **caractérisé en ce que** le chauffage des étapes (c), (c1), (c2), (c3), (c4) ou (c5) est réalisé à une température d'au moins 100°C.

19. Procédé selon l'une des revendications 11 à 18, **caractérisé en ce que** le temps de séjour dans le réacteur est d'au plus 20 millisecondes.

20. Procédé selon l'une des revendications 13 ou 15, **caractérisé en ce que** on réalise l'étape (b'2) ou (d'4) en continu
- soit dans un réacteur dans lequel le temps de séjour du milieu réactionnel dans la zone de mélange du réacteur est d'au plus 100 millisecondes;
- soit dans un réacteur centrifuge dans lequel le temps de séjour du milieu réactionnel dans la zone de mélange du réacteur est d'au plus 10 secondes.

21. Système catalytique, **caractérisé en ce qu'**il comprend une composition selon l'une des revendications 1 à 10.

22. Procédé de traitement des gaz d'échappement des moteurs à combustion interne, **caractérisé en ce qu'**on utilise à titre de catalyseur un système catalytique selon la revendication 21 ou une composition selon l'une des revendications 1 à 10.

## Patentansprüche

1. Zusammensetzung auf der Basis von Oxiden von Cer, Zirkon und mindestens einer anderen seltenen Erde als Cer mit einem Gehalt an Ceroxid von mehr als 50 Massen-% und einem Gehalt an Oxid der anderen seltenen Erde von höchstens 20 %, **dadurch gekennzeichnet, dass** sie nach dem Kalzinieren bei 1000 °C, 4 Stunden, eine Menge an mobilem Sauerstoff zwischen 200 °C und 400 °C von mindestens 0,8 ml O₂/g und eine spezifische Oberfläche aufweist, die mindestens 25 m²/g beträgt, wobei die spezifische Oberfläche mindestens 30 m²/g beträgt, wenn der Gehalt an Ceroxid höchstens 70 % beträgt.

2. Zusammensetzung nach Anspruch 1, die aus einer der folgenden Zusammensetzungen ausgewählt ist:
- Zusammensetzung auf der Basis von Oxiden von Cer, Zirkon, Praseodym und Lanthan;
- Zusammensetzung auf der Basis von Oxiden von Cer, Zirkon, Praseodym und Yttrium;
- Zusammensetzung auf der Basis von Oxiden von Cer, Zirkon, Neodym und Lanthan;
- Zusammensetzung auf der Basis von Oxiden von Cer, Zirkon, Lanthan und Gadolinium;
- Zusammensetzung auf der Basis von Oxiden von Cer, Zirkon, Lanthan und Yttrium.

3. Zusammensetzung nach Anspruch 1 oder Anspruch 2, **dadurch gekennzeichnet, dass** sie eine Menge an mobilem Sauerstoff zwischen 200 °C und 400 °C von mindestens 1 ml O₂/g, spezieller von mindestens 1,2 ml O₂/g, noch spezieller von mindestens 1,8 ml O₂/g aufweist.

4. Zusammensetzung nach Anspruch 1 bis 3, **dadurch gekennzeichnet, dass** sie eine Menge an mobilem Sauerstoff zwischen 200 °C und 450 °C von mindestens 1 ml O₂/g, spezieller von mindestens 2 ml O₂/g, noch spezieller von mindestens 2,5 ml O₂/g aufweist.

5. Zusammensetzung nach einem der vorhergehenden Ansprüche, **dadurch gekennzeichnet, dass** sie einen Gehalt an Ceroxid zwischen einem Wert von mehr als 50 % und 90 %, spezieller zwischen 55 % und 80 % aufweist.

6. Zusammensetzung nach Anspruch 1 bis 5, **dadurch gekennzeichnet, dass** sie einen Gehalt an Oxid der anderen seltenen Erde zwischen 5 % und 20 % aufweist.

7. Zusammensetzung nach Anspruch 1 oder einem der Ansprüche 2 bis 6, **dadurch gekennzeichnet, dass** die seltene Erde aus der Yttrium, Lanthan, Praseodym, Gadolinium und Neodym umfassenden Gruppe ausgewählt ist.

8. Zusammensetzung nach einem der vorhergehenden Ansprüche, **dadurch gekennzeichnet, dass** sie außerdem ein oder mehrere zusätzliche Elemente enthält, die aus der Eisen, Kobalt, Strontium, Kupfer und Mangan umfassenden Gruppe ausgewählt sind.

9. Zusammensetzung nach einem der vorhergehenden Ansprüche, **dadurch gekennzeichnet, dass** sie eine maximale Reduktionstemperatur von höchstens 520 °C nach Kalzinierung bei 1000 °C für 4 Stunden aufweist.

10. Zusammensetzung nach einem der vorhergehenden Ansprüche, **dadurch gekennzeichnet, dass** sie durch eine Ultraschallbehandlung desagglomerierbar ist und dass sie nach dieser Behandlung in Form von Partikeln mit einem mittleren Durchmesser (dso) von höchstens 10 µm vorliegt.

11. Verfahren zur Herstellung einer Zusammensetzung nach einem der vorhergehenden Ansprüche, **dadurch gekennzeichnet, dass** es die folgenden Schritte umfasst:
- (a) man stellt ein flüssiges Gemisch her, das Verbindungen von Cer, Zirkon, der anderen seltenen Erde und gegebenenfalls des zusätzlichen Elements enthält;
- (b) man setzt das Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen Niederschlag erhält;
- (c) man erhitzt den Niederschlag in wässrigem Medium, wobei das Medium bei einem pH-Wert von mindestens 5 gehalten wird;
- (d) man gibt zu dem Niederschlag oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (e) man kalziniert den Feststoff aus dem vorherigen Schritt.

12. Verfahren zur Herstellung einer Zusammensetzung nach einem der Ansprüche 1 bis 10, **dadurch gekennzeichnet, dass** es die folgenden Schritte umfasst:
- (a1) man stellt ein erstes flüssiges Gemisch her, das Verbindungen von Cer und Zirkon enthält, und ein zweites flüssiges Gemisch, das Verbindungen der anderen seltenen Erde und gegebenenfalls des zusätzlichen Elements enthält;
- (b1) man setzt das erste Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen ersten Niederschlag erhält;
- (b'1) man bringt diesen ersten Niederschlag mit dem vorstehend genannten zweiten flüssigen Gemisch in Kontakt, wodurch man einen zweiten Niederschlag erhält;
- (c1) man erhitzt den zweiten Niederschlag in wässrigem Medium, wobei das Medium bei einem pH-Wert von mindestens 5 gehalten wird;
- (d1) man gibt zu dem Niederschlag oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (e1) man kalziniert den Feststoff aus dem vorherigen Schritt.

13. Verfahren zur Herstellung einer Zusammensetzung nach einem der Ansprüche 1 bis 10, **dadurch gekennzeichnet, dass** es die folgenden Schritte umfasst:
- (a2) man stellt ein erstes flüssiges Gemisch her, das Verbindungen von Cer und Zirkon enthält, und ein zweites flüssiges Gemisch, das Verbindungen der anderen seltenen Erde und gegebenenfalls des zusätzlichen Elements enthält;
- (b2) man setzt das erste Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen ersten Niederschlag erhält;
- (b'2) man setzt das vorstehend genannte zweite flüssige Gemisch mit einer basischen Verbindung um, wodurch man einen zweiten Niederschlag erhält;
- (b"2) man mischt den ersten und den zweiten Niederschlag,
- (c2) man erhitzt das nach dem vorherigen Schritt erhaltene Gemisch der Niederschläge in wässrigem Medium, wobei das Medium bei einem pH-Wert von mindestens 5 gehalten wird;
- (d2) man gibt zu dem Niederschlag oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (e2) man kalziniert den Feststoff aus dem vorherigen Schritt.

14. Verfahren zur Herstellung einer Zusammensetzung nach einem der Ansprüche 1 bis 10, **dadurch gekennzeichnet, dass** es die folgenden Schritte umfasst:
- (a3) man stellt ein erstes flüssiges Gemisch her, das Verbindungen von Cer und Zirkon enthält, und ein zweites flüssiges Gemisch, das Verbindungen der anderen seltenen Erde und gegebenenfalls des zusätzlichen Elements enthält;
- (b3) man setzt das erste Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen Niederschlag erhält;
- (c3) man erhitzt den Niederschlag in wässrigem Medium, wobei das Medium bei einem pH-Wert von mindestens 5 gehalten wird;
- (d3) man gibt zu dem Niederschlag oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (d'3) man bringt den Niederschlag aus dem vorherigen Schritt mit dem vorstehend genannten zweiten Gemisch in Kontakt;
- (e3) man kalziniert den Feststoff aus dem vorherigen Schritt.

15. Verfahren zur Herstellung einer Zusammensetzung nach einem der Ansprüche 1 bis 10, **dadurch gekennzeichnet, dass** es die folgenden Schritte umfasst:
- (a4) man stellt ein erstes flüssiges Gemisch her, das Verbindungen von Cer und Zirkon enthält, und ein zweites flüssiges Gemisch, das Verbindungen der anderen seltenen Erde und gegebenenfalls des zusätzlichen Elements enthält;
- (b4) man setzt das erste Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen ersten Niederschlag erhält;
- (c4) man erhitzt den nach dem vorherigen Schritt erhaltenen Niederschlag in wässrigem Medium, wobei das Medium bei einem pH-Wert von mindestens 5 gehalten wird;
- (d4) man gibt zu dem festen Produkt oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (d'4) man setzt das vorstehend genannte zweite flüssige Gemisch mit einer basischen Verbindung um, wodurch man einen zweiten Niederschlag erhält;
- (d"4) man mischt diesen zweiten Niederschlag mit dem nach Schritt (d4) erhaltenen Feststoff oder Medium;
- (e4) man kalziniert das so erhaltene Gemisch.

16. Verfahren zur Herstellung einer Zusammensetzung nach einem der Ansprüche 1 bis 10, **dadurch gekennzeichnet, dass** es die folgenden Schritte umfasst:
- (a5) man stellt ein erstes flüssiges Gemisch her, das Verbindungen von Cer und Zirkon enthält;
- (b5) man setzt das Gemisch mit einer basischen Verbindung im Durchlauf um, und zwar
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
wodurch man am Ausgang des Reaktors einen Niederschlag erhält;
- (c5) man erhitzt den Niederschlag in wässrigem Medium, wobei das Medium bei einem pH-Wert von mindestens 5 gehalten wird;
- (d5) man gibt zu dem Niederschlag oder zu dem Reaktionsmedium aus dem vorherigen Schritt ein Additiv hinzu, das aus anionischen Tensiden, nichtionischen Tensiden, Polyethylenglykolen, Carbonsäuren und deren Salzen und Tensiden des Typs carboxymethylierter Fettalkoholethoxylate ausgewählt ist;
- (e5) man kalziniert den Feststoff aus dem vorherigen Schritt,
- (f5) man stellt ein zweites flüssiges Gemisch her, das Verbindungen der anderen seltenen Erde und gegebenenfalls des zusätzlichen Elements enthält;
- (g5) man imprägniert den kalzinierten Feststoff aus Schritt (e5) mit dem zweiten Gemisch;
- (h5) man kalziniert den Feststoff aus dem vorherigen Schritt.

17. Verfahren nach einem der Ansprüche 11 bis 16, **dadurch gekennzeichnet, dass** man als Verbindungen von Cer, Zirkon, der anderen seltenen Erde und gegebenenfalls des zusätzlichen Elements Verbindungen verwendet, die aus Nitraten, Sulfaten, Acetaten, Chloriden, Cerammoniumnitrat ausgewählt sind.

18. Verfahren nach einem der Ansprüche 11 bis 17, **dadurch gekennzeichnet, dass** das Erhitzen der Schritte (c), (c1), (c2), (c3), (c4) oder (c5) bei einer Temperatur von mindestens 100 °C durchgeführt wird.

19. Verfahren nach einem der Ansprüche 11 bis 18, **dadurch gekennzeichnet, dass** die Verweildauer im Reaktor höchstens 20 Millisekunden beträgt.

20. Verfahren nach einem der Ansprüche 13 oder 15, **dadurch gekennzeichnet, dass** man Schritt (b'2) oder (d'4) im Durchlauf
- entweder in einem Reaktor, in dem die Verweildauer des Reaktionsmediums in der Mischzone des Reaktors höchstens 100 Millisekunden beträgt,
- oder in einem Zentrifugalreaktor, in dem die Verweildauer des Reaktionsmediums in der Mischzone des Reaktors höchstens 10 Sekunden beträgt,
durchführt.

21. Katalysesystem, **dadurch gekennzeichnet, dass** es eine Zusammensetzung nach einem der Ansprüche 1 bis 10 enthält.

22. Verfahren zur Behandlung der Abgase von Verbrennungsmotoren, **dadurch gekennzeichnet, dass** man als Katalysator ein Katalysesystem nach Anspruch 21 oder eine Zusammensetzung nach einem der Ansprüche 1 bis 10 verwendet.

## Claims

1. Composition based on oxides of cerium, zirconium and at least one rare-earth metal other than cerium, with a cerium oxide content of greater than 50% by mass and a content of oxide of the other rare-earth metal of not more than 20%, **characterized in that** it has, after calcination at 1000°C for 4 hours, and amount of oxygen that is mobile between 200°C and 400°C of at least 0.8 ml O₂/g and a specific surface area of at least 25 m²/g, this specific surface area being at least 30 m²/g when the cerium oxide content is not more than 70%.

2. Composition according to Claim 1, which is chosen from one of the following compositions:
- composition based on cerium, zirconium, praseodymium and lanthanum oxides;
- composition based on cerium, zirconium, praseodymium and yttrium oxides;
- composition based on cerium, zirconium, neodymium and lanthanum oxides;
- composition based on cerium, zirconium, lanthanum and gadolinium oxides;
- composition based on cerium, zirconium, lanthanum and yttrium oxides.

3. Composition according to Claim 1 or Claim 2, **characterized in that** it has an amount of oxygen that is mobile between 200°C and 400°C of at least 1 ml O₂/g, more particularly of at least 1.2 ml O₂/g and even more particularly of at least 1.8 ml O₂/g.

4. Composition according to Claims 1 to 3, **characterized in that** it has an amount of oxygen that is mobile between 200°C and 450°C of at least 1 ml O₂/g, more particularly of at least 2 ml O₂/g and even more particularly of at least 2.5 ml O₂/g.

5. Composition according to one of the preceding claims, **characterized in that** it has a cerium oxide content between a value greater than 50% and 90%, more particularly between 55% and 80%.

6. Composition according to Claims 1 to 5, **characterized in that** it has a content of oxide of the other rare-earth metal of between 5% and 20%.

7. Composition according to Claim 1 or one of Claims 2 to 6, **characterized in that** the rare-earth metal is chosen from the group comprising yttrium, lanthanum, praseodymium, gadolinium and neodymium.

8. Composition according to one of the preceding claims, **characterized in that** it also comprises one or more additional elements chosen from the group comprising iron, cobalt, strontium, copper and manganese.

9. Composition according to one of the preceding claims, **characterized in that** it has a maximum reducibility temperature of not more than 520°C after calcination at 1000°C for 4 hours.

10. Composition according to one of the preceding claims, **characterized in that** it is deaggregatable by an ultrasonication treatment and **in that**, after this treatment, it is in the form of particles with a mean diameter (dso) of not more than 10 µm.

11. Process for preparing a composition according to one of the preceding claims, **characterized in that** it comprises the following steps:
- (a) a liquid mixture is formed comprising compounds of cerium, of zirconium, of the other rare-earth metal and, optionally, of the additional element;
- (b) said mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a precipitate is obtained at the reactor outlet;
- (c) said precipitate is heated in aqueous medium, the medium being maintained at a pH of at least 5;
- (d) an additive chosen from anionic surfactants, nonionic surfactants, polyethylene glycols, carboxylic acids and salts thereof, and surfactants of the carboxymethylated fatty alcohol ethoxylate type is added to the precipitate or to the reaction medium derived from the preceding step;
- (e) the solid derived from the preceding step is calcined.

12. Process for preparing a composition according to one of Claims 1 to 10, **characterized in that** it comprises the following steps:
- (a1) a first liquid mixture is formed comprising cerium and zirconium compounds and a second liquid mixture is formed comprising compounds of the other rare-earth metal and, optionally, of the additional element;
- (b1) the first mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a first precipitate is obtained at the reactor outlet;
- (b'1) this first precipitate is placed in contact with the abovementioned second liquid mixture, via which a second precipitate is obtained;
- (c1) the second precipitate is heated in aqueous medium, the medium being maintained at a pH of at least 5;
- (d1) an additive chosen from anionic surfactants, nonionic surfactants, polyethylene glycols, carboxylic acids and salts thereof, and surfactants of the carboxymethylated fatty alcohol ethoxylate type is added to the precipitate or to the reaction medium derived from the preceding step;
- (e1) the solid derived from the preceding step is calcined.

13. Process for preparing a composition according to one of Claims 1 to 10, **characterized in that** it comprises the following steps:
- (a2) a first liquid mixture is formed comprising cerium and zirconium compounds and a second liquid mixture is formed comprising compounds of the other rare-earth metal and, optionally, of the additional element;
- (b2) the first mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a first precipitate is obtained at the reactor outlet;
- (b'2) the abovementioned second liquid mixture is reacted with a basic compound, via which a second precipitate is obtained;
- (b"2) the first and second precipitates are mixed together;
- (c2) the mixture of precipitates obtained after the preceding step is heated in aqueous medium, the medium being maintained at a pH of at least 5;
- (d2) an additive chosen from anionic surfactants, nonionic surfactants, polyethylene glycols, carboxylic acids and salts thereof, and surfactants of the carboxymethylated fatty alcohol ethoxylate type is added to the precipitate or to the reaction medium derived from the preceding step;
- (e2) the solid derived from the preceding step is calcined.

14. Process for preparing a composition according to one of Claims 1 to 10, **characterized in that** it comprises the following steps:
- (a3) a first liquid mixture is formed comprising cerium and zirconium compounds and a second liquid mixture is formed comprising compounds of the other rare-earth metal and, optionally, of the additional element;
- (b3) the first mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a precipitate is obtained at the reactor outlet;
- (c3) said precipitate is heated in aqueous medium, the medium being maintained at a pH of at least 5;
- (d3) an additive chosen from anionic surfactants, nonionic surfactants, polyethylene glycols, carboxylic acids and salts thereof, and surfactants of the carboxymethylated fatty alcohol ethoxylate type is added to the precipitate or to the reaction medium derived from the preceding step;
- (d'3) the precipitate derived from the preceding step is placed in contact with the abovementioned second mixture;
- (e3) the solid derived from the preceding step is calcined.

15. Process for preparing a composition according to one of Claims 1 to 10, **characterized in that** it comprises the following steps:
- (a4) a first liquid mixture is formed comprising cerium and zirconium compounds and a second liquid mixture is formed comprising compounds of the other rare-earth metal and, optionally, of the additional element;
- (b4) the first mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a first precipitate is obtained at the reactor outlet;
- (c4) the precipitate obtained after the preceding step is heated in aqueous medium, the medium being maintained at a pH of at least 5;
- (d4) an additive chosen from anionic surfactants, nonionic surfactants, polyethylene glycols, carboxylic acids and salts thereof, and surfactants of the carboxymethylated fatty alcohol ethoxylate type is added to the solid product or to the reaction medium derived from the preceding step;
- (d'4) the abovementioned second liquid mixture is reacted with a basic compound, via which a second precipitate is obtained;
- (d"4) this second precipitate is mixed with the solid or the medium obtained after step (d4);
- (e4) the mixture thus obtained is calcined.

16. Process for preparing a composition according to one of Claims 1 to 10, **characterized in that** it comprises the following steps:
- (a5) a first liquid mixture is formed comprising cerium and zirconium compounds;
- (b5) said mixture is reacted continuously with a basic compound;
- either in a reactor in which the residence time of the reaction medium in the mixing zone of the reactor is not more than 100 milliseconds,
- or in a centrifugal reactor in which the residence time of the reaction medium in the mixing zone of the reactor is not more than 10 seconds,
via which a precipitate is obtained at the reactor outlet;
- (c5) said precipitate is heated in aqueous medium, the medium being maintained at a pH of at least 5;
- (d5) an additive chosen from anionic surfactants, nonionic surfactants, polyethylene glycols, carboxylic acids and salts thereof, and surfactants of the carboxymethylated fatty alcohol ethoxylate type is added to the precipitate or to the reaction medium derived from the preceding step;
- (e5) the solid derived from the preceding step is calcined;
- (f5) a second liquid mixture is formed comprising compounds of the other rare-earth metal and, optionally, of the additional element;
- (g5) the calcined solid derived from step (e5) is impregnated with the second mixture;
- (h5) the solid derived from the preceding step is calcined.

17. Process according to one of Claims 11 to 16, **characterized in that** use is made, as compounds of cerium, of zirconium, of the other rare-earth metal, and optionally of the additional element, of compounds chosen from nitrates, sulfates, acetates, chlorides and ceric ammonium nitrate.

18. Process according to one of Claims 11 to 17, **characterized in that** the heating in steps (c), (c1), (c2), (c3), (c4) or (c5) is performed at a temperature of at least 100°C.

19. Process according to one of Claims 11 to 18, **characterized in that** the residence time in the reactor is not more than 20 milliseconds.

20. Process according to either of Claims 13 and 15, **characterized in that** step (b'2) or (d'4) is performed continuously
- either in a reactor in which the residence time of the reaction medium in the mixing zone of the reactor is not more than 100 milliseconds;
- or in a centrifugal reactor in which the residence time of the reaction medium in the mixing zone of the reactor is not more than 10 seconds.

21. Catalytic system, **characterized in that** it comprises a composition according to one of Claims 1 to 10.

22. Process for the treatment of exhaust gases from internal combustion engines, **characterized in that** use is made, as catalyst, of a catalytic system according to Claim 21 or of a composition according to one of Claims 1 to 10.
